**Europäisches Patentamt**

**European Patent Office**

**Office européen des brevets**

(11) Veröffentlichungsnummer: **0 158 925**
**B1**

(12) **EUROPÄISCHE PATENTSCHRIFT**

(45) Veröffentlichungstag der Patentschrift: **01.08.90**

(51) Int. Cl.⁵: **C 08 J 7/04, C 09 D 7/12**

(21) Anmeldenummer: **85104014.7**

(22) Anmeldetag: **03.04.85**

(54) Bedruckbare Folie, Verfahren zu ihrer Herstellung und ihre Verwendung.

(30) Priorität: **09.04.84 DE 3413371**

(43) Veröffentlichungstag der Anmeldung:
**23.10.85 Patentblatt 85/43**

(45) Bekanntmachung des Hinweises auf die
Patenterteilung:
**01.08.90 Patentblatt 90/31**

(84) Benannte Vertragsstaaten:
**AT BE CH DE FR GB IT LI NL SE**

(56) Entgegenhaltungen:
GB-A- 870 330
GB-A-1 390 137
GB-A-2 117 270
US-A-3 427 184

Die Akte enthält technische Angaben, die nach
dem Eingang der Anmeldung eingereicht
wurden und die nicht in dieser Patentschrift
enthalten sind.

(73) Patentinhaber: **ESSELTE METO**
**INTERNATIONAL PRODUKTIONS GMBH**
**Brentanostrasse**
**D-6932 Hirschhorn/Neckar (DE)**

(72) Erfinder: **Kalus, Peter**
**Im Spitzerfeld 70**
**D-6903 Neckargemünd (DE)**
Erfinder: **VON Truchsess, Hanns-Martin**
**Bohlenweg Nr. 16**
**D-8750 Aschaffenburg (DE)**

(74) Vertreter: **Schwepfinger, Karl-Heinz, Dipl.-Ing.**
**et al**
**Prinz, Leiser, Bunke & Partner Manzingerweg 7**
**D-8000 München 60 (DE)**

## Beschreibung

Die Erfindung betrifft eine bedruckbare Folie aus Kunststoff mit einer Trägerfolie und mit einer mindestens einseitig aufgebrachten, aus einer festen Polymermatrix und darin eingebetteten mikroporösen feinteiligen Feststoffteilchen bestehenden Schicht zur Aufnahme eines Aufdrucks, ein Verfahren zu ihrer Herstellung und ihre Verwendung.

Gewöhnliche Kunststoffolien lassen sich nur schwer oder überhaupt nicht bedrucken oder beschriften, weil sie eine glatte, geschlossene Oberfläche aufweisen und daher Druckfarben oder Tinten nicht aufnehmen oder aufsaugen können. Darüber hinaus trocknen die Druckfarben auf solchen gewöhnlichen Folien nur sehr langsam, weil die Folien ein zu geringes oder überhaupt kein Absorptionsvermögen besitzen.

Bedruckbare Kunststoffolien sind Spezialfolien, deren Oberfläche so modifiziert worden ist, daß sie mindestens bis zu einem gewissen Grade porös und damit saugfähig sind, wodurch die Druckfarben in oberflächliche Schichten der Folien eindringen können, um dort mehr oder weniger fest haften zu bleiben, und wodurch außerdem eine schnellere Trocknung der Druckfarben erzielt wird.

Es sind bereits verschiedene Arten von bedruckbaren Folien bekannt:

Aus der deutschen Gebrauchsmusterschrift 82 27 503 ist es bekannt, eine Trägerfolie aus Kunststoff mit einer dünnen Papierschicht zu kaschieren, die in besonderer Weise ausgerüstet ist, um die Maschinenlesbarkeit eines auf die Papierschicht aufgebrachten Aufdrucks zu verbessern. Die Trägerfolie aus Kunststoff dient lediglich der Erhöhung der mechanischen Festigkeit, insbesondere der Verbesserung der Reißfestigkeit, während das Papier aufgrund seiner bekannten Porosität und Saugfähigkeit das Bedrucken ermöglicht. Sofern mit Druckfarben bzw. Tinten auf Ölbasis gearbeitet wird, werden die Ölbestandteile von dem Papier rasch absorbiert, so daß der Aufdruck sehr schnell wischfest wird. Ein Trocknungsvorgang im Sinne einer Verdampfung findet dabei nicht statt. Bei Änderungen der Luftfeuchtigkeit oder der Temperatur dehnen sich jedoch die beiden Materialien des aus Kunststoff und Papier bestehenden Verbundes unterschiedlich aus, so daß sich Blasen und Wellen bilden. Aus diesem Grunde konnten die bekannten, mit Papier kaschierten Kunststoffolien nicht zur Herstellung selbstklebender Etiketten verwendet werden.

Eine andere Art bedruckbarer Folien ist aus der DE-OS 20 32 850 bekannt. Dabei handelt es sich um Kunststofffolien, deren Oberflächen nachträglich nach dem Koagulationsverfahren mikroporös gemacht werden. Hierbei werden Folien aus Vinylpolymeren, Polykarbonaten, Polyamid oder Zellulosekunststoffen mit einer Zusammensetzung beschichtet, die ein Harz desselben Typs, aus dem auch die Folie besteht, einen Weichmacher, pulverförmige Feststoffteilchen, Dimethylformamid als Lösungsmittel und gegebenenfalls noch andere Bestandteile enthält. Durch das Dimethylformamid wird die Kunststofffolie chemisch angegriffen, d.h. oberflächlich gelöst oder gequollen. Nun wird das Ganze mit Wasser behandelt, wodurch das Dimethylformamid verdrängt wird und der gelöste Kunststoff unter gleichzeitiger Bildung von Mikroporen koaguliert. Schließlich wird die Folie einer Wärmebehandlung unterworfen. Das feinteilige anorganische Pulver wird infolge der oberflächlichen Auflösung der Trägerfolie und der anschließenden Koagulation Bestandteil der Trägerfolie. Darüber hinaus dient das anorganische Pulver ausschließlich dazu, die Opazität, also die optischen Eigenschaften, insbesondere das Lichtstreuvermögen, der Folie zu verbessern. Das für das Bedrucken der Folie entscheidende Absorptionsvermögen wird ausschließlich mit Hilfe der bei der Koagulation des gelösten Kunststoffs gebildeten Mikroporen erreicht.

Bei einer weiteren bekannten Art einer bedruckbaren Kunststoffolie werden Porosität und damit Aufnahmefähigkeit für Druckfarben dadurch erreicht, daß man eine Folie aus einem Styrolpolymerisat mit Hilfe eines organischen Lösungsmittels aufquillt und das Lösungsmittel anschließend mit einem Nichtlösungsmittel für das Polymerisat oder aber mit einem anderen Lösungsmittel, das eine schwächer quellende Wirkung auf das Polymerisat ausübt als das erstgenannte Lösungsmittel, verdrängt und hierauf die behandelte Folie an der Luft unter Bedingungen trocknet, bei denen die Folie keine Wärmeschrumpfung erleidet. Diese Art bedruckbarer Folien ist aus der DE-OS 22 40 764 bekannt. In der Druckschrift wird jedoch hervorgehoben, daß die Bedruckbarkeit und Beschreibbarkeit nur dann erreicht werden, wenn die Folie aus einem Styrolpolymerisat besteht oder zumindest auf Basis eines Styrolpolymerisats aufgebaut ist, während der gleiche Effekt bei Folien aus anderen Kunststoffen offenbar nicht erreicht werden konnte. Das als Folienmaterial eingesetzte Styrolpolymerisat kann jedoch Zusätze wie Antioxidationsmittel, Weißpigmente, Dispergiermittel, Gleitmittel und Antistatika in herkömmlichen Mengen enthalten. Als Weißpigmente, die offenbar nur der Färbung wegen zugesetzt werden sollen, werden in der Druckschrift Titandioxid, Bariumsulfat, Zinkoxid, Calciumkarbonat, Ton und Kieselsäure genannt, und als Polymerisat zum Dispergieren des Pigments sind niedermolekulares Polyäthylen und Äthyl-Vinylacetat-Copolymerisat genannt.

Auch bei der zuletzt beschriebenen bekannten Art bedruckbarer Folien wird die Porosität im Kunststoffmaterial der Trägerfolie nach dem von der Herstellung wasserdampfdurchlässiger Kunstleder allgemein bekannten Koagulationsverfahren erzielt.

Schließlich ist es bekannt, stark polare Folien, also Folien aus Polymerisaten, die aus stark polaren Monomeren aufgebaut sind, an der Oberfläche mechanisch oder chemisch aufzurauhen und direkt zu bedrucken. Dies ist z.B. bei Folien aus Polyvinylchlorid und Polystyrol möglich. Bei typisch "unpolaren Folien" dagegen, also z.B. Folien aus Polyäthylen oder Polypropylen, ist eine direkte Bedruckung mit Schwierigkeiten hinsichtlich der Haftung und der erforderlichen Trocknungszeiten verbunden, und zwar selbst dann, wenn die Oberflächenspannung dieser Folien durch Korona-Entladungen erhöht wird.

Aus GB-A-1 390 137 ist eine bedruckbare Folie aus Kunststoff mit einer Trägerfolie und mit einer einseitig aufgebrachten, aus einer festen Polymermatrix und darin eingebetteten mikroporösen feinteiligen Feststoffteilchen bestehenden Schicht zur Aufnahme eines Aufdrucks bekannt, wobei die Polymermatrix aus Polyacrylaten, Polymethacrylaten, Polyestern, Styrol-Copolymerisaten, Nitrozellulose und dergleichen besteht, während als mikroporöse feinteilige Feststoffteilchen vorzugsweise Pigmente wie Siliciumdioxid, Silikate oder Bariumsulfat in dem die Polymermatrix bildenden Bindemittel dispergiert sind. Dabei besitzt das Druckfarbe absorbierende Pigment im wesentlichen denselben Brechungsindex wie das Bindemittel.

GB-A-870 330 beschreibt bedruckbare Polyesterfolien mit einer mindestens einseitig aufgebrachten, aus einer festen Polymermatrix und darin eingebetteten feinteiligen Feststoffteilchen bestehenden Schicht zur Aufnahme eines Aufdrucks, wobei die feste Polymermatrix aus Terephthalsäureestern und die darin eingebetteten feinteiligen Feststoffteilchen aus inerten Füllstoffen wie z.B. Glaspulver, Siliciumdioxid, Aluminiumoxid, Titandioxid, Siliciumcarbid, Talkum oder Kreide bestehen. Vorzugsweise wird vor der Beschichtung der Polyester-Trägerfolien ein Haftvermittler oder Primer aufgetragen.

Die bisher bekannten besonders beschichteten Folien waren jedoch zum Aufbringen einer maschinenlesbaren Schrift (OCR-Schrift) oder eines Strichcodes, insbesondere auch mit Handdruckgeräten wie Handetikettiermaschinen, nicht geeignet, weil die Druckfarbe nicht schnell genug und vor allem nicht mit ausreichender Konturenschärfe aufgenommen wurde.

Bei mit Hilfe des Naßkoagulationsverfahrens erzeugten Porenstrukturen ist die Konturenschärfe des Aufdrucks generell schlecht, weil die Strichbreite durch seitliches Abfließen der Druckfarbe in unerwünschter Weise verbreitert wird.

Der Erfindung liegt die Aufgabe zugrunde, eine bedruckbare Folie aus Kunststoff zu schaffen, deren Porosität, Saugfähigkeit und Aufnahmefähigkeit für Druckfarben im Vergleich zu den bisher bekannten bedruckbaren Folien verbessert ist, so daß sich kürzere Trocknungszeiten des Aufdrucks und damit höhere Druckgeschwindigkeiten, gleichzeitig aber eine verbesserte Konturenschärfe des Aufdrucks erreichen lassen.

Der Erfindung liegt ferner die Aufgabe zugrunde, ein verbessertes und vereinfachtes Verfahren zur Herstellung einer solchen bedruckbaren Folie zu schaffen.

Diese Aufgabe wird erfindungsgemäß durch eine bedruckbare Folie aus Kunststoff mit einer Trägerfolie und mit einer mindestens einseitig aufgebrachten, aus einer festen Polymermatrix und darin eingebetteten mikroporösen feinteiligen Feststoffteilchen bestehenden Schicht zur Aufnahme eines Aufdrucks gelöst, die dadurch gekennzeichnet ist, daß die den Aufdruck aufnehmende Schicht mit der Trägerfolie einen integralen Verbund bildet und daß die Trägerfolie aus einem aus unpolaren Monomeren gebildeten Kunststoff besteht.

Dadurch, daß die Porosität bei der erfindungsgemäßen Folie nur an definierten Orten innerhalb der den Aufdruck aufnehmenden Schicht vorliegt, nämlich innerhalb der mikroporösen feinteiligen Feststoffteilchen, die in der festen Polymermatrix eingebettet und dadurch festgehalten und gegen Herausfallen gesichert sind, wird nicht nur eine hohe Aufnahmefähigkeit für Druckfarben und damit eine gute Verankerung des Aufdrucks und eine rasche Trocknung erreicht, sondern gleichzeitig wird eine ganz wesentliche Verbesserung der Konturenschärfe des Aufdrucks erzielt, weil nämlich die feste Polymermatrix selbst nicht porös ist. Die Druckfarbe kann also nur in die Poren der mikroporösen Feststoffteilchen eindringen, wobei die einzelnen Feststoffteilchen aber durch ein äußerst feines Gerüst aus nichtporösem festem Polymerisat, eben der Polymermatrix, voneinander getrennt sind. An der Phasengrenze zwischen den mikroporösen Feststoffteilchen und der nichtporösen Polymermatrix wird das weitere Vordringen der Druckfarbe gestoppt, so daß ein seitliches Auseinanderfließen, was gleichbedeutend ist mit einer Verringerung der Konturenschärfe, verhindert wird.

Die den Aufdruck aufnehmende Schicht bildet mit der Trägerfolie einen integralen Verbund, so daß keine Ablösungserscheinungen durch unterschiedliche Wärmeausdehnung oder durch Änderung der Luftfeuchtigkeit auftreten können.

Die Trägerfolie besteht erfindungsgemäß aus solchen Kunststoffen, die aus unpolaren Monomeren gebildet sind, insbesondere Polyäthylen oder Polypropylenfolien, weil diese Folien billiger, darüber hinaus aber reißfester sind als Folien aus polaren Kunststoffen wie z.B. Polyvinylchlorid (PVC) und Polystyrol. Als Polyäthylenfolien können sowohl solche aus Hochdruckpolyäthylen als auch solche aus Niederdruckpolyäthylen verwendet werden. Die Folien können gefüllt, gefärbt, geschäumt oder auf sonstige bekannte Weise vorbehandelt oder ausgerüstet sein.

Die Polymermatrix der zur Aufnahme eines Aufdrucks bestimmten Schicht der erfindungsgemäßen Folie besteht vorzugsweise im wesentlichen aus einem oder mehreren der folgenden synthetischen oder natürlichen Polymerisate: Polyacrylate, Polymethacrylate, Polyester, Polystyrole, Poly-1,3-diene wie z.B. Polybutadien, Polyamide, Polyurethane, Polyvinylbutyral, Polyvinylacetat, Alkydharze, Harnstoffharze, modifizierte Nitrozellulose, mit Schelllack oder Kolophonium modifizierte Harze, Stärke, Kasein, sowie deren Misch- und Copolymerisate.

Als saugfähige Feststoffteilchen, die in die feste Polymermatrix eingebettet sind, sind mikroporöse Pigmente und/oder Füllstoffe besonders geeignet. Da die Zuordnung bestimmter mineralischer Stoffe zu der Gruppe der Pigmente oder der Gruppe der Füllstoffe nicht immer eindeutig getroffen werden kann und in der Fachwelt teilweise umstritten ist (vgl. Ullmanns Enzyklopädie der technischen Chemie, 4. Auflage, Bd. 18, S. 548, Verlag Chemie GmbH, D-6940 Weinheim (1979)), sei darauf hingewiesen, daß es im Rahmen der Erfindung nicht auf die Bezeichnung oder die genaue Zuordnung der Feststoffteilchen ankommt, sondern ausschließlich darauf, daß diese Teilchen feinteilig oder pulverförmig sind und eine mikroporöse innere Struktur aufweisen.

Besonders bevorzugt für die erfindungsgemäßen Zwecke ist die Gruppe der Weißpigmente und der weißen bzw. farblosen Füllstoffe wie z.B. Aluminiumoxid, Bariumsulfat, Titandioxid, Kieselsäure, Silikate, Kreide, Stärke, Melaminharze und/oder Formaldehydharze, und zwar jeweils in Form feinteiliger Pulver mit großer spezifischer Oberfläche.

Zusätzlich kann die den Aufdruck aufnehmende Schicht aber auch gefärbt sein, also neben den vorstehend genannten mikroporösen Pigmenten und/oder Füllstoffen auch noch Buntpigmente und/oder Leuchtpigmente enthalten, die ihrerseits nicht porös zu sein brauchen. Unter Leuchtpigmenten sind sowohl Fluorenszenz als auch Phosphoreszenzpigmente zu verstehen.

Die erfindungsgemäße Folie kann einseitig oder beidseitig mit einer Schicht zur Aufnahme eines Aufdrucks versehen sein. Wenn die Folie nur auf einer Seite eine bedruckbare Schicht aufweist, dann kann die andere Seite auch selbstklebend ausgerüstet sein, also mit einer an sich bekannten adhäsiven Haftkleberschicht versehen sein.

Das erfindungsgemäße Verfahren zur Herstellung der bedruckbaren Folie, bei dem eine Kunststoff-Trägerfolie auf mindestens einer Seite unter Bildung einer saugfähigen Schicht zur Aufnahme eines Aufdrucks beschichtet wird, ist durch die Kombination folgender Merkmale gekennzeichnet:

als Trägerfolie wird eine Folie aus einem aus unpolaren Monomeren gebildeten Kunststoff verwendet;

auf die zu beschichtende Seite der Trägerfolie wird ein flüssiger Haftvermittler aufgetragen und anschließend, soweit erforderlich, getrocknet;

auf die so vorbehandelte Seite der Trägerfolie wird ein inniges Gemisch aus mindestens einem durch Aushärtung und/oder Vernetzung eine feste Polymermatrix bildenden Bindemittel und mikroporösen feinteiligen Feststoffteilchen schichtbildend aufgetragen und anschließend, soweit erforderlich, getrocknet.

Das erfindungsgemäße Verfahren läßt sich mit Hilfe herkömmlicher Beschichtungseinrichtungen und Maschinen einfach und schnell, kontinuierlich oder diskontinuierlich, durchführen. Mit Hilfe des flüssigen Haftvermittlers wird eine innige, chemische und physikalische Bindung zwischen der saugfähigen Schicht zur Aufnahme des Aufdrucks und der Trägerfolie erzielt, die so beschaffen ist, daß die den Aufdruck aufnehmende Schicht mit der Trägerfolie einen integralen Verbund bildet. Dadurch wird erreicht, daß sich die bedruckbare Schicht nicht mehr von der Trägerfolie ablösen oder abziehen läßt und daß der Verbund eine hohe Temperaturwechselbeständigkeit und Unempfindlichkeit gegenüber Luftfeuchtigkeitsänderungen erhält, so daß die Folie auch unter ungünstigen Lagerbedingungen und extremen klimatischen Bedingungen, wie sie etwa in tropischen Ländern vorherrschen, über lange Zeiträume ohne Beeinträchtigung ihrer Bedruckbarkeit gelagert werden kann. Aus den gleichen Gründen ist sichergestellt, daß aus der erfindungsgemäßen Folie hergestellte Etiketten auch unter ungünstigen äußeren Bedingungen sich selbst dann nicht von der damit belegten oder beklebten Oberfläche ablösen, wenn diese Oberflächen gekrümmt sind oder Kanten oder Ecken einschließen.

Bei einer bevorzugten Ausführungsform des erfindungsgemäßen Verfahrens wird als Haftvermittler eines oder mehrere der folgenden synthetischen oder natürlichen Polymerisate verwendet: Polyacrylate, Polymethacrylate, Polyester, Polystyrole, Poly-1,3-diene, Polyamide, Polyurethane, Polyvinylbutyral, Polyvinylacetat, Alkydharze, Harnstoffharze, modifizierte Nitrozellulose, mit Schellack oder Kolophonium modifizierte Harze, sowie deren Misch- und Copolymerisate.

Der Haftvermittler wird dabei vorzugsweise in einer Menge von etwa 0,2 bis 0,5 $g/m^2$, bezogen auf dessen Trockengewicht, aufgetragen.

Da der Haftvermittler in sehr dünner Schicht aufgetragen wird, kann der Auftrag sogar mittels einer Druckmaschine erfolgen, aber natürlich auch mittels eines Rollcoaters oder jeder anderen herkömmlichen, für geringe Flächengewichte des Auftrags geeigneten Beschichtungseinrichtung erfolgen.

Als die Polymermatrix bildendes Bindemittel wird erfindungsgemäß eines oder mehrere der folgenden Polymerisate verwendet: Polyacrylate, Polymethacrylate, Polyester, Polystyrole, Poly-1,3-diene, Polyamide, Polyurethane, Polyvinylbutyral, Polyvinylacetat, Alkydharze, Harnstoffharze, modifizierte Nitrozellulose, mit Schellack oder Kolophonium modifizierte Harze, Stärke, Kasein, sowie deren Misch- und Copolymerisate.

Das gleiche Polymerisat kann also sowohl als Haftvermittler als auch als die Polymermatrix bildendes Bindemittel eingesetzt werden, was die feste, innige Verbindung zwischen der bedruckbaren, saugfähigen Schicht und der Trägerfolie begünstigt. Andererseits ist es aber nicht zwingend erforderlich, daß als Haftvermittler und als die Polymermatrix bildendes Bindemittel jeweils das gleiche Polymerisat verwendet wird.

Das Gemisch aus dem Bindemittel und den Feststoffteilchen wird vorteilhaft in einer Menge von mindestens etwa 2 $g/m^2$, bezogen auf das Trockengewicht des Gemischs, aufgetragen, wobei der Bereich zwischen etwa 2 und 12 g/m² besonders bevorzugt ist.

Bei einer weiteren vorteilhaften Ausführungsform des erfindungsgemäßen Verfahrens wird der Haftvermittler und/oder das Bindemittel in Form einer Lösung oder Dispersion in einem geeigneten Lösemittel verwendet. Bevorzugt wird der Haftvermittler und/oder das Bindemittel jedoch in reaktiv vernetzender und/oder lösemittelfreier Form verwendet, weil das Herstellungsverfahren dann schneller durchgeführt werden kann und weil keine Probleme mit gegebenenfalls brennbaren, explosiven, giftigen Lösemitteldämpfen, die gegebenenfalls kondensiert und im Kreislauf rückgeführt werden müssen, entstehen.

Die Wahl eines geeigneten Lösemittels stellt für den Fachmann kein Problem dar; sie hängt von der Art des verwendeten Polymerisats und von der Art der Trägerfolie ab.

Als feinteilige Feststoffteilchen werden erfindungsgemäß vorzugsweise mikroporöse Pigmente und/oder Füllstoffe verwendet, die vorzugsweise der Gruppe der Weißpigmente bzw. der weißen oder farblosen Füllstoffe angehören wie z.B. Aluminiumoxid, Bariumsulfat, Titandioxid, Kieselsäure, Silikate, Kreide, Stärke, Melamin- und/oder Formaldehydharze, jeweils in Form feinteiliger Pulver mit großer spezifischer Oberfläche.

Zur Erzielung besonderer ästhetisch ansprechender Effekte kann das Gemisch aus Bindemittel und Feststoffteilchen durch einen Zusatz an Buntpigmenten und/oder Leuchtpigmenten, die nicht mikroporös zu sein brauchen, gefärbt werden. Darüber hinaus kann natürlich auch die Trägerfolie gefärbt oder ungefärbt sein, Metallteilchen aus Kupfer, Messing, Bronze, Silber, Gold oder Aluminium in fein-disperser Form enthalten oder eine geprägte oder geschliffene gerauhte oder auf andere Weise strukturierte Oberfläche aufweisen.

Als Trägerfolie wird eine Folie aus einem Kunststoff verwendet, der aus unpolaren Monomeren gebildet ist. Besonders vorteilhaft sind Polyäthylen- und Polypropylenfolien, weil sie in großen Mengen zu günstigen Preisen zur Verfügung stehen und darüber hinaus reißfester sind als polare Folien.

Einer der besonderen Vorteile, die mit der Erfindung erreicht werden, besteht ja gerade darin, daß diese unpolaren Folien als Trägerfolien verwendet werden können und trotzdem, ohne daß die Kaschierung mit Papier erforderlich wäre, durch Aufbringen der aus der Polymermatrix und den darin eingebetteten mikroporösen feinteiligen Feststoffteilchen bestehenden Schicht bedruckbar gemacht werden können.

Wenn die erfindungsgemäßen unpolaren Trägerfolien, insbesondere also Polyäthylen- oder Polypropylenfolien, verwendet werden, dann ist es in vielen Fällen vorteilhaft, diese unpolaren Folien in an sich bekannter Weise einer Korona-Entladungs-Vorbehandlung zu unterziehen, um dadurch die Oberflächenspannung der Folie zu erhöhen. In diesen Fällen wird die Korona-Vorbehandlung durchgeführt, bevor der Haftvermittler aufgetragen wird, weil das Haftvermögen der dünnen Haftvermittlerschicht auf der Trägerfolie dadurch zusätzlich erhöht wird.

Eine weitere vorteilhafte Ausführungsform des erfindungsgemäßen Verfahrens besteht schließlich darin, daß eine Seite der Folie mittels einer adhäsiven Schicht selbstklebend ausgerüstet wird.

Die erfindungsgemäße bedruckbare Folie kann überall dort eingesetzt werden, wo es auf eine papierähnliche Bedruckbarkeit, gleichzeitig aber auf eine höhere mechanische Festigkeit, insbesondere höhere Reißfestigkeit, bessere Temperaturwechselbeständigkeit, Unempfindlichkeit gegenüber Feuchtigkeit und Luftfeuchtigkeitsschwankungen ankommt. Besonders vorteilhaft ist die Verwendung der erfindungsgemäßen Folie zur Herstellung von bedruckbaren, selbstklebenden oder nicht-selbstklebenden Etiketten, die gegebenenfalls farbig, reflektierend oder lumineszent ausgerüstet sein können. Die erfindungsgemäße Folie kann ferner als beschreibbare Fläche - oder mit entsprechendem Aufdruck versehen - zum Bekleben von Schildern aller Art, z.B. Verkehrsschildern und Wegweisern verwendet werden. Aus der Folie können ferner Aufkleber aller Art hergestellt werden. Die erfindungsgemäße Folie ist auch besonders zur Herstellung von Preisauszeichnungsetiketten geeignet, die maschinell oder mit Handdruck- oder Handetikettiergeräten bedruckt und auf beliebige Oberflächen aufgebracht werden. Beim Bedrucken der erfindungsgemäßen Folie wird eine so ausgezeichnete Konturenschärfe erhalten, daß auch optisch bzw. maschinell lesbare Schriften (OCR-Schrift) und Strichcodes ohne Schwierigkeiten aufgedruckt und problemlos gelesen bzw. identifiziert werden können.

Ein weiterer besonderer Vorteil der erfindungsgemäßen Folie besteht in den extrem kurzen Trocknungszeiten, die zum Trocknen des Aufdrucks benötigt werden. Kurze Trocknungszeiten erleichtern die Handhabung nach dem Bedrucken der Folie oder daraus hergestellten Etiketten, weil die Stapelhöhe der bedruckten Bögen, Rollen oder Bänder vergrößert werden kann und gleichzeitig die Druckgeschwindigkeit erhöht werden kann. Aufgrund des hohen Saugvermögens der den Aufdruck aufnehmenden Schicht wird der Aufdruck sehr schnell wischfest und soweit trocken, daß die Folie oder daraus geschnittene Bänder praktisch unmittelbar nach dem Bedrucken aufgerollt werden können.

Wenn aus der erfindungsgemäßen Folie Etiketten bzw. Etikettenbänder hergestellt werden, die nicht rechteckig oder dreieckig geschnitten sind, sondern eine kompliziertere geometrische Form aufweisen, so daß zwischen je zwei benachbarten Etiketten und zwischen den Etiketten und dem Rand des Bandes oder der Folie schmale Stege stehen bleiben, wenn die Etiketten ausgestanzt oder ausgeschnitten werden, dann läßt sich das aus den stehenbleibenden Stegen gebildete "Gitter" sehr schnell von einem bei selbstklebender Ausrüstung erforderlichen Hilfsträger, z.B. einem Release-Papier oder, Silikonpapier, abziehen, ohne daß das Gitter reißt. Dies bedeutet, daß die Produktionsgeschwindigkeit bei der Herstellung solcher Selbstklebeetiketten mit komplizierter geometrischer Form erhöht werden kann oder daß, bei gleichbleibender Produktionsgeschwindigkeit, die Gitterstege sehr viel schmaler bleiben können als bisher, was eine Materialeinsparung und damit geringere Abfallmengen bedeutet.

Schließlich besteht ein weiterer mit der Erfindung erzielter Vorteil darin, daß die Saugfähigkeit der zur Aufnahme eines Aufdrucks bestimmten Schicht auf einfache Weise gesteuert und auf den gewünschten Wert eingestellt werden kann, und zwar durch geeignete Wahl des Mengenverhältnisses zwischen dem die feste Polymermatrix bildenden Bindemittel und den mikroporösen feinteiligen Feststoffteilchen. Es leuchtet ein, daß bei einem zu geringen Anteil an Bindemittel die feinteiligen Feststoffteilchen in der bedruckbaren Schicht nicht ausreichend festgehalten werden, weil sich die feste Polymermatrix nicht vollständig ausbilden kann. Wenn andererseits der Anteil des Bindemittels zu hoch ist, werden die mikrorösen Feststoffteilchen von einer absolut dichten Hülle aus dem die Polymermatrix bildenden Polymerisat umgeben sein, so daß die aufsaugende Wirkung der Poren vollkommen zunichtegemacht wird. Das Mengenverhältnis zwischen dem Bindemittel und den mikroporösen Feststoffteilchen muß also so gewählt werden, daß einerseits die Feststoffteilchen nicht abfallen bzw. aus der Polymermatrix herausfallen und andererseits die Poren der Feststoffteilchen nicht durch eine geschlossene Umhüllung verstopft werden. Die Wahl des jeweils richtigen Mengenverhältnisses oder für einen bestimmten Verwendungszweck besonders geeigneten Mengenverhältnisses bereitet dem Fachmann, wenn er erst einmal von der erfindungsgemäßen Lehre Kenntnis erhalten hat, keinerlei Schwierigkeiten.

Die Erfindung wird nachfolgend anhand einiger Beispiele weiter erläutert:

Beispiel 1

Eine Polyäthylenfolie wird mit 0,2 g/m² eines flüssigen Haftvermittlers mittels einer für dünne Auftragsschichten geeigneten Beschichtungseinrichtung, z.B. einer Tiefdruck- oder Flexodruckmaschine, beschichtet. Der flüssige Haftvermittler besteht aus 20 Teilen ("Teile" bedeuten in allen nachfolgenden Beispielen immer Gewichtsteile) einer 50%igen Lösung aus Polyvinylchlorid/Vinylpropionat in Äthylacetat und 50 Teilen Isopropylacetat. Die so vorbehandelte Folie durchläuft eine Trocknungseinrichtung und wird dann mittels einer herkömmlichen Beschichtungseinrichtung, z.B. einem Rollcoater, mit 3 g/m² eines innigen Gemisches aus 20 Teilen einer 50%igen Lösung aus Polyvinylchlorid/ Vinylpropionat in Äthylacetat, 80 Teilen Isopropylacetat und 5 Teilen gefälltem Aluminiumoxid beschichtet und anschließend getrocknet.

Beispiel 2

Wie in Beispiel 1 beschrieben, wird eine Polyäthylenfolie einseitig zunächst mit 0,2 g/m² eines flüssigen Haftvermittlers und danach mit 2 g/m² eines mikroporöse Feststoffteilchen enthaltenden Gemischs beschichtet. Dabei wird als Haftvermittler ein Gemisch aus 50 Teilen eines handelsüblichen plastifizierten Harnstoffharzes, 60 Teilen Spiritus und 6 Teilen einer 10%igen Lösung von Toluolsulfonsäure in Spiritus verwendet. Für den zweiten Strich wird ein Gemisch aus 50 Teilen eines handelsüblichen plastifizierten Harnstoffharzes, 100 Teilen Spiritus, 7,5 Teilen gefällter Kieselsäure und 6 Teilen einer 10%igen Lösung von Toluolsulfonsäure in Spiritus verwendet.

Beispiel 3

Ein flüssiger Haftvermittler aus 12 Teilen eines vernetzenden Polyester-Aminoplast-Polymerisats, 40 Teilen Spiritus und 5 Teilen Äthylglykol wird in solcher Menge auf eine Polyäthylenfolie aufgebracht, daß das Beschichtungsgewicht, in trockenem Zustand, 0,2 g/m² beträgt. Auf die so vorbehandelte Folie werden 5 g/m², bezogen auf das Trockengewicht, eines Gemischs aus 12 Teilen eines vernetzenden Polyester-Aminoplast-Polymerisats, 55 Teilen Spiritus, 5 Teilen Äthylglykol, 4 Teilen einer handelsüblichen Tagesleuchtfarbe und 2 Teilen feint. Aluminiumoxids aufgetragen. Im übrigen wird, wie in Beispiel 1 beschrieben, verfahren.

Beispiel 4

Es wird, wie in Beispiel 1 beschrieben, gearbeitet. Als Trägerfolie wird eine Polypropylenfolie verwendet. Der flüssige Haftvermittler besteht aus 50 Teilen eines Acrylsäure-Styrol-Copolymerisats, 40 Teilen Wasser, 0,5 Teilen Phosphorsäure und 0,05 Teilen eines handelsüblichen Entschäumers. Das Trockengewicht des Haftvermittler-Strichs beträgt 0,5 g/m². Der zweite Strich besteht aus einem Gemisch aus 59 Teilen Acrylsäure-Styrol-Copolymerisat, 150 Teilen Wasser, 1 Teil eines Dispergators, 150 Teilen Kreide, 50 Teilen Stärkepulver, 150 Teilen Kasein in Form einer 20%igen Lösung in Ammoniak und 10 Teilen eines handelsüblichen Harnstoffharzes. Das Trocken-Beschichtungsgewicht des zweiten Strichs beträgt 8 g/m².

Beispiel 5

Eine Polypropylenfolie wird mit einem Haftvermittler aus 35 Teilen eines Vinylacetat-Äthylen-Copolymerisats, 50 Teilen Wasser, 0,2 Teilen eines Dispergiermittels und 12 Teilen Kreide in einer Menge von 0,5 g/m², bezogen auf das Trockengewicht, beschichtet. Der zweite Strich besteht aus 100 Teilen eines handelsüblichen Vinylacetat-Äthylen-Copolymerisats, 250 Teilen Wasser, 1 Teil eines Dispergiermittels, 100 Teilen Titandioxid, 150 Teilen einer Tagesleuchtfarbe, 400 Teilen einer 10%igen wäßrigen Stärkelösung und 10 Teilen einer handelsüblichen Harnstoffharzlösung und wird in einer Menge von 12 g/m², bezogen auf das Trockengewicht, auf die mit dem Haftvermittler vorbehandelte Folie aufgetragen. Im übrigen wird, wie in Beispiel 1 beschrieben, getrocknet und die unbeschichtete Seite der Polypropylenfolie mit einer Haftkleberschicht versehen, welche mit einem Releasepapier abgedeckt wird.

## Patentansprüche

1. Bedruckbare Folie aus Kunststoff mit einer Trägerfolie und mit einer mindestens einseitig aufgebrachten, aus einer festen Polymermatrix und darin eingebetteten mikroporösen feinteiligen Feststoffteilchen bestehenden Schicht zur Aufnahme eines Aufdrucks, dadurch gekennzeichnet, daß die den Aufdruck aufnehmende Schicht mit der Trägerfolie einen integralen Verbund bildet und daß die Trägerfolie aus einem aus unpolaren Monomeren gebildeten Kunststoff besteht.

2. Folie nach Anspruch 1, dadurch gekennzeichnet, daß die Polymermatrix im wesentlichen aus einem oder mehreren der folgenden synthetischen oder natürlichen Polymerisate besteht: Polyacrylate, Polymethacrylate, Polyester, Polystyrole, poly-1,3-diene, Polyamide, Polyurethane, Polyvinylbutyral, Polyvinylacetat, Alkydharze, Harnstoffharze, modifizierte Nitrozellulose, mit Schellack oder Kolophonium modifizierte Harze, Stärke, Kasein, sowie deren Misch- und Copolymerisate.

3. Folie nach Anspruch 1 oder 2, dadurch gekennzeichnet, daß die Feststoffteilchen mikroporöse Pigmente und/oder Füllstoffe sind.

4. Folie nach Anspruch 3, dadurch gekennzeichnet, daß die mikroporösen Feststoffteilchen aus Aluminiumoxid, Bariumsulfat, Titandioxid, Kieselsäure, Silikaten, Kreide, Stärke, Melaminharzen und/oder Formaldehydharzen, jeweils in Form feinteiliger Pulver mit großer spezifischer Oberfläche, bestehen.

5. Folie nach Anspruch 4, dadurch gekennzeichnet, daß die den Aufdruck aufnehmende Schicht zusätzlich Buntpigmente und/oder Leuchtpigmente enthält.

6. Folie nach einem der Ansprüche 1 bis 5, dadurch gekennzeichnet, daß die Trägerfolie aus Polyäthylen oder Polypropylen besteht.

7. Folie nach einem der Ansprüche 1 bis 6, dadurch gekennzeichnet, daß sie selbstklebend ausgerüstet ist.

8. Verfahren zur Herstellung der bedruckbaren Folie gemäß einem der Ansprüche 1 bis 7, bei dem eine Kunststoff-Trägerfolie auf mindestens einer Seite unter Bildung einer saugfähigen Schicht zur Aufnahme eines Aufdrucks beschichtet wird, gekennzeichnet durch die Kombination folgender Merkmale:

als Trägerfolie wird eine Folie aus einem aus unpolaren Monomeren gebildeten Kunststoff verwendet;

auf die zu beschichtende Seite der Trägerfolie wird ein flüssiger Haftvermittler aufgetragen und anschließend, soweit erforderlich, getrocknet;

auf die so vorbehandelte Seite der Trägerfolie wird ein inniges Gemisch aus mindestens einem durch Aushärtung und/oder Vernetzung eine feste Polymermatrix bildenden Bindemittel und mikroporösen feinteiligen Feststoffteilchen schichtbildend aufgetragen und anschließend, soweit erforderlich, getrocknet.

9. Verfahren nach Anspruch 8, dadurch gekennzeichnet, daß als Haftvermittler eines oder mehrere der folgenden synthetischen oder natürlichen Polymerisate verwendet wird: Polyacrylate, Polymethacrylate, Polyester, Polystyrole, Poly-1,3-diene, Polyamide, Polyurethane, Polyvinylbutyral, polyvinylacetat, Alkydharze, Harnstoffharze, modifizierte Nitrozellulose, mit Schellack oder Kolophonium modifizierte Harze, sowie deren Misch- und Copolymerisate.

10. Verfahren nach Anspruch 9, dadurch gekennzeichnet, daß der Haftvermittler in einer Menge von etwa 0,2 bis 0,5 g/m², bezogen auf dessen Trockengewicht, aufgetragen wird.

11. Verfahren nach einem der Ansprüche 8 bis 10, dadurch gekennzeichnet, daß als die Polymermatrix bildendes Bindemittel eines oder mehrere der folgenden Polymerisate verwendet wird: Polyacrylate, Polymethacrylate, Polyester, Polystyrole, Poly-1,3-diene, Polyamide, Polyurethane, Polyvinylbutyral, Polyvinylacetat, Alkydharze, Harnstoffharze, modifizierte Nitrozellulose, mit Schellack oder Kolophonium modifizierte Harze, Stärke, Kasein, sowie deren Misch- und Copolymerisate.

12. Verfahren nach Anspruch 11, dadurch gekennzeichnet, daß das Gemisch aus Bindemittel und Feststoffteilchen in einer Menge von mindestens etwa 2 g/m², bezogen auf das Trockengewicht des Gemischs, aufgetragen wird.

13. Verfahren nach einem der Ansprüche 8 bis 12, dadurch gekennzeichnet, daß der Haftvermittler und/oder das Bindemittel in Form einer Lösung oder Dispersion in einem geeigneten Lösemittel verwendet wird.

14. Verfahren nach einem der Ansprüche 8 bis 12, dadurch gekennzeichnet, daß der Haftvermittler und/oder das Bindemittel reaktiv vernetzend und/oder lösemittelfrei ist.

15. Verfahren nach einem der Ansprüche 8 bis 14, dadurch gekennzeichnet, daß als feinteilige Feststoffteilchen mikroporöse Pigmente und/oder Füllstoffe verwendet werden.

16. Verfahren nach Anspruch 15, dadurch gekennzeichnet, daß als mikroporöse Feststoffteilchen Aluminiumoxid, Bariumsulfat, Titandioxid, Kieselsäure, Silikate, Kreide, Stärke, Melaminharze und/oder Formaldehydharze, jeweils in Form feinteiliger Pulver mit großer spezifischer Oberfläche, verwendet werden.

17. Verfahren nach einem der Ansprüche 8 bis 16, dadurch gekennzeichnet, daß das Gemisch aus Bindemittel und Feststoffteilchen durch einen Zusatz an Buntpigmenten und/oder Leuchtpigmenten gefärbt wird.

18. Verfahren nach einem der Ansprüche 8 bis 17, dadurch gekennzeichnet, daß als Trägerfolie eine Polyäthylen- oder Polypropylenfolie verwendet wird.

19. Verfahren nach einem der Ansprüche 8 bis 18, dadurch gekennzeichnet, daß die Oberflächenspannung der Trägerfolie durch Korona-Entladungen erhöht wird, bevor der Haftvermittler aufgetragen wird.

20. Verfahren nach einem der Ansprüche 8 bis 19, dadurch gekennzeichnet, daß das Auftragen des Haftvermittlers mittels einer Druckmaschine erfolgt.

21. Verfahren nach einem der Ansprüche 8 bis 20, dadurch gekennzeichnet, daß eine Seite der Folie mittels einer adhäsiven Schicht selbstklebend ausgerüstet wird.

22. Verwendung der Folie gemäß einem der Ansprüche 1 bis 7 zur Herstellung von bedruckbaren, selbstklebenden oder nichtselbstklebenden Etiketten.

## Revendications

1. Pellicule imprimable en matière plastique comprenant une feuille de support et une couche appliquée au moins d'un côté, constituée d'une matrice polymérique solide et de particules microporeuses finement divisées de matière solide incorporées dans cette matrice, destinée à recevoir une impression, caractérisée en ce que la couche recevant l'impression forme avec la feuille de support une liaison intégrée et en ce que la feuille de support est constituée d'une matière plastique formée à partir de monomères non polaires.

2. Pellicule suivant la revendication 1, caractérisée en ce que la matrice polymérique est essentiellement constituée d'un ou plusieurs des polymères synthétiques ou naturels suivants: polyacrylates, polyméthacrylates, polyesters, polystyrènes, poly-1,3 diènes, polyamides, polyuréthannes, polyvinylbutyral, polyacétate de vinyle, résines alkyd, résines d'urée, nitrocellulose modifiée, résines modifiées à la gomme-laque ou à la colophane, amidon, caséine, ainsi que leurs produits mixtes de polymérisation et leurs produits de copolymérisation.

3. Pellicule suivant la revendication 1 ou 2, caractérisée en ce que les particules de matière solide sont des pigments microporeux et/ou des charges microporeuses.

4. Pellicule suivant la revendication 3, caractérisée en ce que les particules microporeuses de matière solide sont constituées d'oxyde d'aluminium, de sulfate de baryum, de dioxyde de titane, d'acide silicique, de silicates, de craie, d'amidon, de résines mélamine et/ou de résines formaldéhyde, dans chaque cas sous forme de poudre finement divisée ayant une grande surface spécifique.

5. Pellicule suivant la revendication 4, caractérisée en ce que la couche recevant l'impression contient en outre des pigments multicolores et/ou des pigments luminescents.

6. Pellicule suivant l'une des revendications 1 à 5, caractérisée en ce que la feuille de support est en polyéthylène ou en polypropylène.

7. Pellicule suivant l'une des revendications 1 à 6, caractérisée en ce qu'elle est rendue auto-adhésive.

8. Procédé de production de la pellicule imprimable suivant l'une des revendications 1 à 7, dans lequel une feuille de support en matière plastique est enduite d'au moins un côté avec formation d'une couche absorbante destinée à recevoir une impression, caractérisé par l'ensemble des particularités suivantes:

on utilise comme feuille de support une feuille en une matière plastique formée de monomères non polaires;

on applique un agent liquide d'adhésivité sur le côté à enduire de la feuille de support, puis on le sèche, si nécessaire;

on applique pour former une couche sur le côté de la feuille de support ainsi pré-traité, un mélange intime d'au moins un liant formant une matrice polymérique solide par durcissement et/ou par réticulation et de particules solides microporeuses finement divisées, puis on sèche dans la mesure nécessaire.

9. Procédé suivant la revendication 8, caractérisé en ce qu-on utilise comme agent d'adhésivité un ou plusieurs des polymères synthétiques ou naturels suivants: polyacrylates, polyméthacrylates, polyesters, polystyrènes, poly-1,3-diènes, polyamides, polyuréthannes, polyvinylbutyral, polyacétate de vinyle, résines alkyd, résines d'urée, nitrocelluloses modifiées, résines modifiées par la gomme-laque ou la colophane ainsi que leurs produits mixtes de polymérisation et leurs produits de copolymérisation.

10. Procédé suivant la revendication 9, caractérisé en ce que l'agent d'adhésivité est appliqué en une quantité d'environ 0,2 à 0,5 $g/m^2$, par rapport à son poids sur base sèche.

11. Procédé suivant l'une des revendications 8 à 10, caractérisé en ce qu'on utilise comme liants formant la matrice polymérique un ou plusieurs des polymères suivants: polyacrylates, polyméthacrylates, polyesters, polystyrènes, poly-1,3-diènes, polyamides, polyuréthannes, polyvinylbutyral, polyacétate de vinyle, résines alkyd, résines d'urée, nitrocelluloses modifiées, résines modifiées à la gomme-laque ou à la colophane, amidon, caséine, ainsi que leurs produits de polymérisation mixtes et de copolymérisation.

12. Procédé suivant la revendication 11, caractérisé en ce que le mélange de liant et de particules solides est appliqué en une quantité d'au moins environ 2 $g/m^2$ par rapport au poids sec du mélange.

13. Procédé suivant l'une des revendications 8 à 12, caractérisé en ce que l'agent d'adhésivité et/ou le liant sont utilisés sous forme d'une solution ou dispersion dans un solvant approprié.

14. Procédé suivant l'une des revendications 8 à 12, caractérisé en ce que l'agent d'adhésivité et/ou le liant sont susceptibles de réticulation par réaction et/ou sont dépourvus de solvant.

15. Procédé suivant l'une des revendications 8 à 14, caractérisé en ce qu'on utilise, comme particules de matières solides finement divisées, des pigments microporeux et/ou des charges microporeuses.

16. Procédé suivant la revendication 15, caractérisé en ce qu'on utilise comme particules solides microporeuses l'oxyde d'aluminium, le sulfate de baryum, le dioxyde de titane, l'acide silicique, des silicates, la craie, l'amidon, des résines de mélamine et/ou des résines de formaldéhyde, dans chaque cas sous forme de poudre finement divisée, de grande surface spécifique.

17. Procédé suivant l'une des revendications 8 à 16, caractérisé en ce que le mélange de liant et de particules solides est coloré par l'addition de pigments multicolores et/ou de pigments luminescents.

18. Procédé suivant l'une des revendications 8 à 17, caractérisé en ce qu'on utilise comme feuille de support une feuille de polyéthylène ou de polypropylène.

19. Procédé suivant l'une des revendications 8 à 18, caractérisé en ce que la tension superficielle de la feuille de support est élevée par des décharges avec effet de couronne avant l'application de l'agent d'adhésivité.

20. Procédé suivant l'une des revendications 8 à 19, caractérisé en ce que l'application de l'agent d'adhésivité est effectuée au moyen d'une presse.

21. Procédé suivant l'une des revendications 8 à 20, caractérisé en ce qu-un côté de la pellicule est rendu autocollant au moyen d'une couche adhésive.

22. Utilisation de la pellicule suivant l'une des revendications 1 à 7 pour la production d'étiquettes imprimables autocollantes ou non autocollantes.

**Claims**

1. Imprintable sheet of plastic comprising a carrier sheet and a layer applied on at least one side for receiving an imprint and consisting of a firm polymer matrix and microporous finely divided solid particles embedded therein, characterized in that the layer receiving the imprint forms an integral composite structure with the carrier sheet and that the carrier sheet consists of a plastic formed from non-polar monomers.

2. Sheet according to claim 1, characterized in that the polymer matrix consists substantially of one or more of the following synthetic or natural polymerisates: polyacrylates, polymethacrylates, polyesters, polystyrenes, poly-1,3-dienes, polyamides, polyurethanes, polyvinyl butyral, polyvinyl acetate, alkyde resins, urea resins, modified nitrocelluloses, resins modified with shellack or colophony, starch, casein, and their mixed polymerisates and copolymerisates:

3. Sheet according to claim 1 or 2, characterized in that the solid particles are microporous pigments and/or fillers.

4. Sheet according to claim 3, characterized in that the microporous solid particles consist of aluminum oxide, barium sulfate, titanium dioxide, silicic acid, silicates, chalk, starch, melamine resins and/or formaldehyde resins, each in the form of finely divided powder with large specific surface area.

5. Sheet according to claim 4, characterized in that the layer receiving the imprint additionally contains color pigments and/or luminescent pigments.

6. Sheet according to any one of claims 1 to 5, characterized in that the carrier sheet consists of polyethylene or polypropylene.

7. Sheet according to any one of claims 1 to 6, characterized in that it is finished to be self-adhesive.

8. Method for producing the imprintable sheet according to any one of claims 1 to 7, wherein a plastic carrier sheet is coated on at least one side to form an absorbent layer for receiving an imprint, characterized by the combination of the following features:

a sheet consisting of a plastic formed from non-polar monomers is used as carrier sheet;

a liquid primer is applied to the side of the carrier sheet to be coated and thereafter, insofar as necessary, dried;

to the side of the carrier sheet thus treated an intimate mixture of at least one binding agent forming a firm polymer matrix by curing and/or crosslinking and microporous finely divided solid particles is applied to form a layer and thereafter, insofar as necessary, dried.

9. Method according to claim 8, characterized in that as primer one or more of the following synthetic or natural polymerisates is used: polyacrylates, polymethacrylates, polyesters, polystyrenes, poly-1,3-dienes, polyamides, polyurethanes, polyvinyl butyral, polyvinyl acetate, alkyde resins, urea resins, modified nitrocelluloses, resins modified with shellack or colophony, and their mixed polymerisates and copolymerisates.

10. Method according to claim 9, characterized in that the primer is applied in an amount of about 0.2 to 0.5 g/m² with respect to the dry weight.

11. Method according to any one of claims 8 to 10, characterized in that as binding agent forming the polymer matrix one or more of the following polymerisates is used: polyacrylates, polymethacrylates, polyesters, polystyrenes, poly-1,3-dienes, polyamides, polyurethanes, polyvinyl butyral, polyvinyl acetate, alkyde resins, urea resins, modified nitrocelluloses, resins modified with shellack or colophony, starch, casein, and their mixed polymerisates or copolymerisates.

12. Method according to claim 11, characterized in that the mixture of binding agent and solid particles is applied in an amount of at least about 2 g/m² with respect to the dry weight.

13. Method according to any one of claims 8 to 12, characterized in that the primer and/or the binding agent is used in the form of a solution or dispersion in a suitable solvent.

14. Method according to any one of claims 8 to 12, characterized in that the primer and/or binding agent is reactively crosslinking and/or solvent-free.

15. Method according to any of one of claims 8 to 14, characterized in that as finely divided solid particles microporous pigments and/or fillers are used.

16. Method according to claim 15, characterized in that as microporous solid particles aluminum oxide, barium sulfate, titanium dioxide, silicic acid, silicates, chalk, starch, malamine resins and/or formaldehyde resins are used, in each case in the form of finely divided powders with large specific surface area.

17. Method according to any one of claims 8 to 16, characterized in that the mixture of binding agent and solid particles is colored by an addition of color pigments and/or luminescent pigments.

18. Method according to any one of claims 8 to 17, characterized in that as carrier sheet a polyethylene or polypropylene sheet is used.

19. Method according to any one of claims 8 to 18, characterized in that the surface tension of the carrier sheet is increased by corona discharges before the primer is applied.

20. Method according to any one of claims 8 to 19, characterized in that the primer is applied by means of a printing machine.

21. Method according to any one of claims 8 to 20, characterized in that one side of the sheet is finished to be self-adhesive by means of an adhesive layer.

22. Use of the sheet according to any one of claims 1 to 7, for making imprintable self-adhesive or non-self-adhesive labels.